# EUROPEAN PATENT APPLICATION

(11) **EP 1 432 151 A1**
(43) Date of publication of application: **23.06.2004**
(21) Application number: 02406116.0
(22) Date of filing: 19.12.2002
(51) Int. Cl.: H04B 10/10, H04L 12/28, G07C 9/00

(54) **On-Site localisation system and method**

(71) Applicant: ABB RESEARCH LTD., 8050 Zürich (CH)
(72) Inventor: Skaalvik, Jonny, 1385 Asker (NO); Dzung, Dacfey, 5430 Wettingen (CH); Aakvaag, Niels, 1362 Hosle (NO); Lokstad, Trond, 1450 Nesoddtangen (NO)
(74) Representative: ABB Patent Attorneys

(57) **Abstract**

The invention is concerned with an on-site localization technique which allows to localise remote control requests or the position of a particular person on room level within a building or site. Advantage is taken of the short-range propagation characteristics of infrared or acoustic signals being exchanged between a stationary device (20) and a portable device (10). The stationary device (20) has a room identifier ID2 characterizing the room (2) which represents the wireless communication range of the stationary device, whereas the portable device (10) optionally has a device identifier ID10. The room identifier, together with the device identifier or a simple remote control request signal, is transmitted to a management system (5) via a radio link or a local area network (6).

## Description

### FIELD OF THE INVENTION

The invention relates to the field of localisation techniques for the localisation of mobile devices or the tracking of persons in buildings. It is concerned with an on-site localisation system and an on-site localisation method for localising a portable device as described in the preamble of claims 1 and 5, respectively.

### BACKGROUND OF THE INVENTION

A number of applications destined to an intelligent management of facilities such as office buildings or hotels require the localisation of individuals. In some applications, such as wireless control of equipment or access control management, the position of the individual needs to be tracked to a high degree of accuracy, whereas for others an identification of the room suffices. A typical example of application of the latter type is a remote control of lights or blinds, where a person wants to switch on lights or lower blinds only in the room where the person resides at present.

Known localisation systems use fixed short range radio frequency (RF) detectors to detect signals emitted from localisation devices, such as electronic tags, badges or pagers, to be carried by a targeted person. The person is localised when a signal from his tag is detected by a given short range receiver.

In the patent US 6,275,477 B1 a campus area pager system is provided, including a local area network (LAN) having a system backbone interconnecting base stations for wireless communication to several paging units or mobile terminals including RF receivers and transmitters and being carried by a respective user. A paging unit initiates a registration or localisation process by broadcasting a request to any base stations available to receive the broadcast. The latter respond to the paging unit, which in turn selects a canonical base station to register with according to certain criteria such as smallest load. Look-up tables relating to any registered paging unit or mobile terminal its canonical base station are maintained in a pager server. However, as radio waves easily traverse light walls in e.g. an office environment, localisation of a person on a room level by radio propagation is unreliable.

The Patent Application EP-A 0 631 226 discloses a method for ultrasonically, i.e. with an audio frequency of 30-50 kHz, communicating information from a source to a destination such as a remote display device in the form of a shelf label. A transceiver ultrasonically broadcasts an identifier and associated data to display devices within the broadcast area and receives receipt signals. Any display device includes a comparator for determining whether a received broadcast identifier matches the unique identifier of the display device. Only if this is the case, the display device communicates an acknowledgement signal to the source, thus limiting power consumption. Additionally, pre-existing sound systems may be employed and, contrary to optically based communication systems, no line-of-sight connection is required.

### DESCRIPTION OF THE INVENTION

It is an objective of the invention to determine the position of a portable device and/or the position of a person carrying the portable device inside a building on a room level. This objective is achieved by an on-site localisation system according to claim 1 and an on-site localisation method according to claim 5. Further preferred embodiments are evident from the dependent patent claims.

In the inventive system or method, advantage is taken from the propagation and attenuation characteristic of acoustic or infrared (IR) signals through solid obstacles such as doors and walls, which effectively prevent the reception of said signals outside of the room in which their source is located. Thus, short-range signals of the type mentioned allow to localise a portable or mobile device within the perimeter of said room.

According to the invention, a portable device communicates with stationary devices which are mounted in and associated to various rooms of a building via an infrared or acoustic communication channel. Due to this short-range type of communication, only the stationary device which is mounted in the one room where the portable device resides at present may exchange messages with the latter. Any signal or request from the portable device is, together with a room identifier, transmitted to a central management system or data server which in turn may control any remotely controllable apparatus in said room. To that purpose, it is not necessary for the portable device to transmit any kind of device identifier, the management system will respond to any request originating from a particular room and not related to any restricted access rights.

In a first preferred embodiment, the stationary devices are connected to the management system via a local area network. A message from the portable device is received by a particular stationary device, supplemented with the corresponding room identifier and transmitted via the local area network to the management system. In this case, the portable device only transmits and the stationary devices only receive infrared or acoustic messages.

In an alternative embodiment, a wireless access point is provided and connected with the management server via the local area network and communicates with the portable device in a long-range type of communication via a radio communication channel. The information containing the room identifier is continuously broadcasted from the stationary device to any portable device presently residing within its reach, and thus is known to a particular portable device which transmits the room identifier together with a message to the wireless access point from where it is relayed to the management system. In this case, the provision of one single wireless access point, which can be anywhere on the site due to the long-range radio communication, renders a local area network interconnecting all the stationary devices unnecessary. Further, the latter only need to transmit infrared or acoustic messages, whereas the portable device only receives them.

In a preferred embodiment, a method for localising and identifying a portable device is created by assigning a device identifier to each portable device and transmitting the latter together with any request or other signal to the management system.

The above method is further refined in a way which allows to continuously track a person carrying said portable device and moving around the building. This is useful e.g. for the deviation of phone calls or other information directed to said person. To this purpose, the central management system no longer waits for the portable device to manifest itself by issuing a control request signal, but does at any time and preferably at regularly spaced intervals transmit a position indication request to the portable device via a wireless access point and a long-range radio transmission channel. Upon reception of such a request, the portable device concerned and identified by a device identifier in the request, instantly replies in one of the manners described above, thus revealing its present location, i.e. the corresponding room identifier, to the management system.

In a first embodiment of this tracking method, the portable device transmits, upon reception of a request from the management system, a signal to the stationary device which supplements the signal with the room identifier. This information is then returned to the management system via a local area network to which all the stationary devices involved have to be connected.

In an alternative embodiment, the portable device answers the request from the management system by listening for a room identifier and transmits the room identifier via the radio communication link back to the management system. This implies that all the stationary devices involved continuously broadcast their respective room identifier within the corresponding room.

In order to complete the foregoing tracking methods, and in particular the second method involving portable devices which do respond by transmitting radio signals, a registration process is initiated once the person enters the building and picks up a portable device dispended near the site entrance. Similarly, authentication is required if the person brings along its own portable device to the site. A registration radio message including a device identifier is emitted and received by the management system, and the name of the person is transmitted with the same message or made known via a different channel to the management system which in turn links and memorizes the latter with the device identifier.

In a preferred variant of the invention, ultrasound is used as the first short-range communication channel. Thus, the transmission is not dependent on a line-of-sight or on amplitude-dependent diffuse reflections as is the case with infrared wave propagation. Furthermore, no interference with audible background noise is to be feared as is the case with acoustic transmission over audible frequencies. As generally only short messages are to be transmitted, these advantages outweigh the inconvenience of a possibly lower data rate of the ultrasound channel.

### BRIEF DESCRIPTION OF THE DRAWINGS

The subject matter of the invention will be explained in more detail in the following text with reference to preferred exemplary embodiments which are illustrated in the attached drawings, which schematically represent
Fig.1 a localisation system according to a first embodiment of the invention,
Fig.2 a localisation system according to a second embodiment of the invention, and
Fig.3 two localisation systems according to preferred methods for tracking persons.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

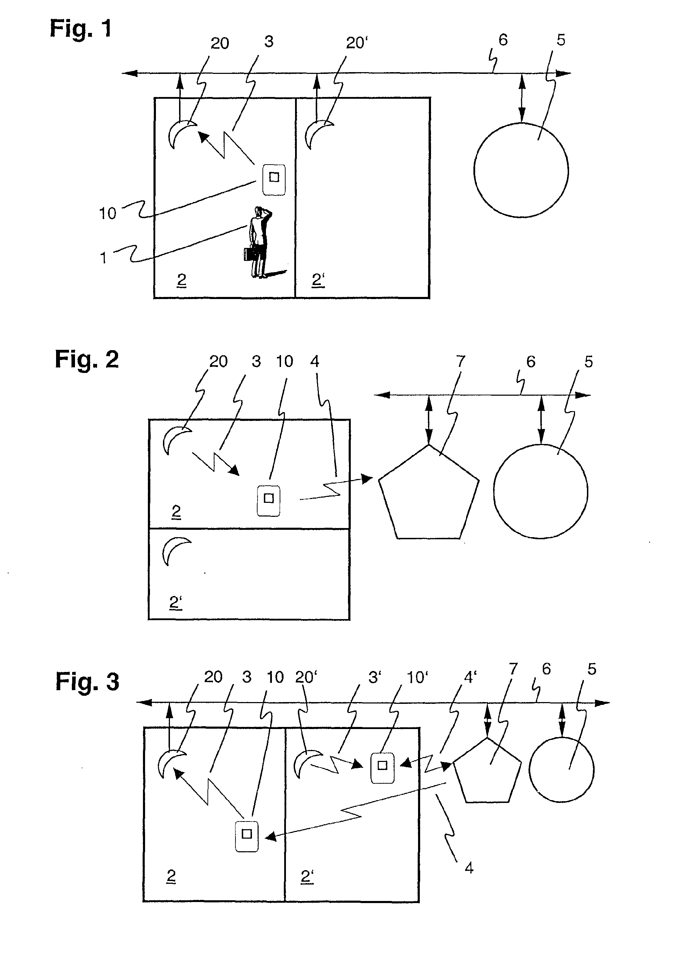

Fig.1, Fig.2 and Fig.3 show schematical representations of possible manifestations of the invention as described above and based on several of the following building blocks:

A portable or mobile device 10 such as a laptop PC, a palm PC, a handheld digital assistant or a wireless telephone able to communicate with a stationary device 20 and, in certain embodiments, a wireless access point 7 and generally being carried by and associated with a target person 1.

Short-range stationary devices 20,20' i.e. either infrared or acoustic receiver/transmitter containing a room identifier ID2,ID2' unique for each room 2,2' in the building and being mounted inside and associated with the corresponding room 2,2'.

A wireless access point 7, such as a radio base station or radio transceiver. In larger buildings, one wireless access point per floor may be provided.

A management system 5 or centralized data server for receiving remote control request signals issued by the portable device 10 and/or for tracking and monitoring the position of a target person 1 or her portable device 10, respectively. The management system 5 may also store information about the person's access rights and the link between the person 1 and her portable device 10. Control involves a variety of services such as lights, blinds, audio or any other equipment compatible with remote control.

A local area network 6 which interconnects the management system 5, the wireless access point 7 and, in some embodiments, the short-range stationary devices 20,20'. Local area networks (LAN) such as Ethernet are commonplace in modem office buildings.

In Fig.1, the portable device 10 transmits messages to the short-range stationary device 20, which relays them on to the management system 5 via its own fixed access to the local area network 6, adding to the messages a room identifier ID2. In this embodiment, no wireless access point is needed

In Fig.2, the short-range device 20 regularly transmits, via a short-range communication channel 3, a room identifier ID2 to any portable device 10 which is located within the room 2 assigned to the short-range device 20. Upon reception, the portable device 10 relays the room identifier ID2 via the long-range communication channel 4 to the access point 7 and on to the management system 5, together with e.g. a remote control request signal. Hence, the device 20 only has to be equipped with a transmitter, i.e. a loudspeaker or some IR light source.

In Fig.3 two ways of operating in a tracking mode are depicted. The management system 5 sends out a "paging" message via the wireless access point 7 and the radio channel 4,4' to the portable device 10,10' at regularly spaced intervals or whenever someone needs to know the present position of the tracked person. In a first embodiment, the portable device 10 then transmits a message including a device identifier ID10 via the channel 3 to the stationary device 20, and from there, together with a room identifier ID2, via the local area network 6 to the management system 5. In a second embodiment, the portable device 10' listens for a room identifier ID2' which it transmits, together with a device identifier ID10', via the radio channel 4 to the management system 5. In this case, the stationary device 20' does not require to access the local area network 6, but the portable device 10' also needs a radio transmitter means.

An IR-based stationary device has to be equipped with an infrared light source and/or receiver, whereas most portable devices already dispose of an IR interface of the IrDA type which can be re-used for this new purpose. An acoustic communication channel is preferably based on ultrasound, but the use of audible sound frequencies with a room ID being encoded in either a pleasant or a discreet gong-like tone is also conceivable.

### LIST OF DESIGNATIONS

- 1: target person
- 10: portable device
- 2,2': room
- 20,20': stationary device
- 3: first wireless communication channel
- 4: radio communication channel
- 5: management system
- 6: local area network
- 7: wireless access point

## Claims

1. An on-site localisation system for localising a portable device (10), comprising a management system (5) connected to a local area network (6), and several stationary devices (20,20'), wherein each stationary device (20,20') has a room identifier (ID2,ID2') identifying a room (2,2') the stationary device (20,20') is associated with, and wherein each stationary device (20,20') and the portable device (10) are able to communicate via a first wireless communication channel (3),
**characterised in that** the first wireless communication channel (3) is a short-range communication channel based on infrared (IR) or acoustic communication, and **in that** both a signal from the portable device (10) and a room identifier (ID2) identifying the room (2) the portable device (10) resides in, are simultaneously transmittable to the management system (5).

2. The on-site localisation system according to claim 1, **characterized in that** the stationary devices (20,20') are connected to the local area network (6) and **in that** the signal from the portable device (10) is transmittable to the management system (5) via the first communication channel (3) and, together with the room identifier (ID2), via the local area network (6).

3. The on-site localisation system according to claim 1, **characterized in that** a wireless access point (7) is connected to the local area network (6) and **in that** the wireless access point (7) and the portable device (10) are able to communicate via a radio communication channel (4), and **in that** the room identifier (ID2) from the stationary device (20) is transmittable to the management system (5) via the first communication channel (3) and, together with the signal from the portable device (10), via the radio communication channel (4).

4. The on-site localisation system according to one of the preceding claims, **characterized in that** the first wireless communication channel (3) is based on ultrasound communication.

5. A method for localising and identifying a portable device (10) based on an on-site localisation system according to one of claims 1 to 4 and comprising a management system (5) connected to a local area network (6) and several stationary devices (20,20'), wherein each stationary device (20,20') has a room identifier (ID2,ID2') identifying a room (2,2') the stationary device (20,20') is associated with, and wherein the portable device (10) has a device identifier (ID10) and each stationary device (20,20') and the portable device (10) communicate via a first wireless communication channel (3), **characterized in that** each stationary device (20,20') and the portable device (10) communicate via a first wireless communication channel (3) based on short-range infrared (IR) or acoustic communication, and **in that** both a signal from the portable device (10) including the device identifier (ID10) and a room identifier (ID2) identifying the room (2) the portable device (10) resides in, are simultaneously transmitted to the management system (5).

6. The method according to claim 5, wherein the on-site localisation system comprises a wireless access point (7), and wherein the wireless access point (7) and the stationary devices (20) are connected to the local area network (6), and wherein the wireless access point (7) and the portable device (10) communicate via a radio communication channel (4), **characterized in that** a request from the management system (5) is transmitted to the portable device (10) via the radio communication channel (4), and the signal from the portable device (10) is transmitted to the management system (5) via the first communication channel (3) and, together with the room identifier (ID2), via the local area network (6).

7. The method according to claim 5, wherein the on-site localisation system comprises a wireless access point (7) connected to the local area network (6), and wherein the wireless access point (7) and the portable device (10) communicate via a radio communication channel (4), **characterized in that** a request from the management system (5) is transmitted to the portable device (10') via the radio communication channel (4), and the room identifier (ID2') is received by the portable device (10') and further transmitted to the management system (5) via the radio channel (4).

8. The method according to claim 6 or 7, **characterized in that** a person (1) carrying the portable device (10) is registered with the management system (5) by transmitting a registration signal including the device identifier (ID10) via the radio communication channel (4) from the portable device (10) to the management system (5), and by simultaneously entering the person's name into the management system (5).
